# EUROPEAN PATENT SPECIFICATION

(11) **EP 1 696 460 B1**
(45) Date of publication and mention of the grant of the patent: **29.09.2010**
(21) Application number: 06250142.4
(22) Date of filing: 12.01.2006
(51) Int. Cl.: H01J 17/49

(54) **Plasma display apparatus**
Plasmaanzeigevorrichtung
Appareil d'affichage à plasma

(30) Priority: 13.01.2005 KR 2005003471
(43) Date of publication of application: 30.08.2006
(73) Proprietor: LG Electronics, Inc., Seoul 150-010 (KR)
(72) Inventor: Joo, Hyung Dal, Daejeon-si, 305-330 (KR)
(74) Representative: Camp, Ronald

(56) References cited:
- EP-A- 1 387 386
- US-A1- 2002 047 566
- US-A1- 2004 189 200

## Description

The present invention relates to a plasma display apparatus. It more particularly relates to a plasma display apparatus which can lower a discharge voltage by decreasing parasitic capacitance of a panel, thereby reducing power consumption.

A cathode ray tube (CRT) or a Braun tube which has been mainly used up to now has the disadvantages of a large weight and a large volume. Therefore, various kinds of flat panel displays (FPD) which can overcome the limitations of such a cathode ray tube have been developed.

As flat panel displays, there are liquid crystal displays (LCD), plasma display panels (hereinafter, referred to as "PDP"), field emission displays (FED), electro luminescence (EL), etc.

Among such flat panel displays, a PDP which can be easily manufactured in large panel sizes has been in the spotlight. A PDP displays an image and moving images including a character or a graphic by allowing a phosphor to emit light in response to excitation by ultraviolet radiation of 147nm generating upon discharging of He+Xe, Ne+Xe, and He+Ne+Xe gas. Such a PDP displays an image by adjusting the discharge period of each pixel depending on video data and provides a picture quality which is greatly improved thanks to the recent technical development.

Specifically, a three-electrode AC surface-discharge PDP lowers a voltage required for discharge by accumulating wall charges using a dielectric layer upon discharging and protects electrodes from sputtering of plasma, so that it has an advantage of a low voltage drive and a long lifetime.

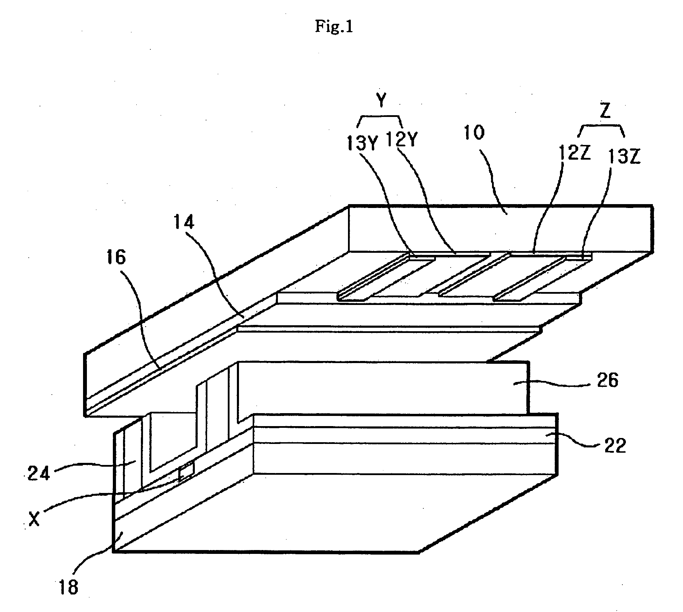

FIG. 1 is a perspective view illustrating a discharge cell of a three-electrode AC surface-discharge PDP in the prior art.

Referring to FIG. 1, the discharge cell of the three-electrode AC surface-discharge PDP includes a scan electrode (Y) and a sustain electrode (Z) which are formed on an upper substrate 10 and an address electrode (X) which is formed on a lower substrate 18. Each of the scan electrode (Y) and the sustain electrode (Z) includes transparent electrodes (12Y, 12Z) and metal bus electrodes (13Y, 13Z) which have a line width smaller than that of the transparent electrode (12Y, 12Z) and which are formed in one edge of the transparent electrode.

The transparent electrodes (12Y, 12Z) are generally made of a metal such as an indium tin oxide (ITO), an indium zinc oxide (IZO), and an indium tin zinc oxide (ITZO) and formed on the upper substrate 10. The metal bus electrodes (13Y, 13Z) are generally made of a metal such as chromium (Cr) and formed on the transparent electrodes (12Y, 12Z) to reduce a drop in voltage by the transparent electrodes (12Y, 12Z) having high resistance. An upper dielectric layer 14 and a protective film 16 are stacked in the upper substrate 10 in which the scan electrode (Y) and the sustain electrode (Z) are formed in parallel.

The protective film 16 prevents damage of the upper dielectric layer 14 by sputtering generated upon discharging plasma and increases emission efficiency of a secondary electron. Magnesium oxide (MgO) is generally used as the protective film 16.

A lower dielectric layer 22 and a barrier rib 24 are formed on a lower substrate 18 in which the address electrode (X) is formed and a phosphor layer 26 is coated on the surface of the lower dielectric layer 22 and the barrier rib 24. The address electrode (X) is formed in a direction to intersect the scan electrode (Y) and the sustain electrode (Z).

Wall charges formed due to discharge are stacked in the upper dielectric layer 14 and the lower dielectric layer 22. The dielectric layers 14 and 22 and the protective film 16 can lower the discharge voltage applied from the outside.

The barrier rib 24 and the upper and lower substrates 10 and 18 form a discharge space. The barrier rib 24 is formed in parallel to the address electrode and prevents ultraviolet radiation and visible radiation generated by gas discharge from leaking into an adjacent discharge cell. An inert gas such as He, Ne, Ar, Xe, and Kr for gas discharge, a discharge gas (or mixed gas) with which these gases are combined, or an excimer gas which can generate ultraviolet radiation due to discharge fill a discharge space formed between the upper and lower substrates 10 and 18 and the barrier rib 24.

The phosphor layer 26 is excited by ultraviolet radiation generated by discharging plasma and generates any one color of visible light of red (R), green (G) or blue (B).

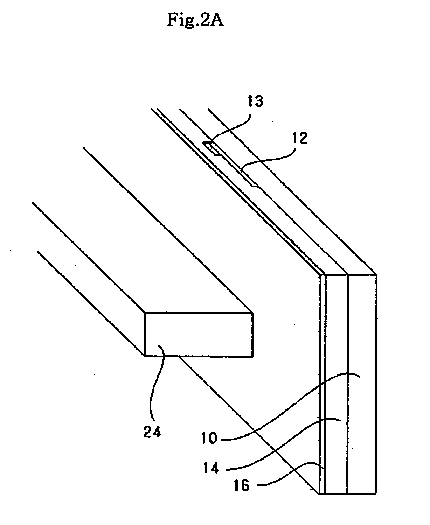

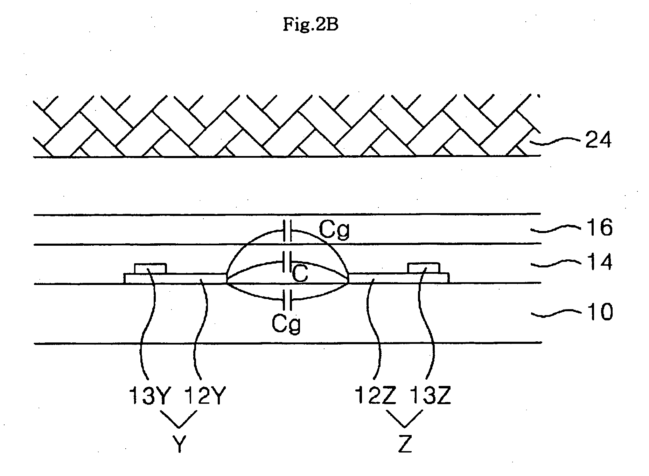

FIG. 2A shows a barrier rib and an upper substrate in the prior art and FIG. 2B shows parasitic capacitance formed in the barrier rib in the prior art.

As shown in FIG. 2A, in a PDP in the prior art, the scan electrode and the sustain electrode 12, 13 are formed in the upper substrate 10 and the dielectric layer 14 is formed to cover the scan electrode (Y) and the sustain electrode (Z) and the upper substrate 10. As the barrier rib 24 is positioned in a right lower portion of the protective film 16 after the protective film 16 is coated on the dielectric layer 14, the discharge space is partitioned.

As shown in FIG. 2B, the scan electrode (Y) and the sustain electrode (Z) formed in a direction intersecting the barrier rib 24 are positioned in this portion and charges are charged by a driving signal applied to the scan electrode (Y) and the sustain electrode (Z). That is, parasitic capacitance is formed by elements having a dielectric constant around the electrodes (Y, Z).

The dielectric layer 14 and the protective film 16 which are formed between the barrier rib 24 and the upper substrate 10 and the upper substrate 10 form parasitic capacitance of a non-discharge area. This is because the dielectric constants of glass, the dielectric layer 14, and the protective film 16 which are used as a material of the upper substrate 10 are different from each other. Among them, because the parasitic capacitance (Cs) between electrodes generated in the protective film 16 is much smaller than the parasitic capacitances (C, Cg) generated in the upper substrate 10 or the dielectric layer 14, it does not greatly matter.

In addition, the parasitic capacitance (Cg) between electrodes generated in the upper substrate 10 is greatly improved by the recent adoption of a glass substrate having a low dielectric constant.

Even in the dielectric layer 14, a parasitic capacitance (C) is generated between the electrodes (Y, Z). Specifically, a portion shown in FIG. 2B is an area which partitions a discharge space as the barrier rib 24 and the upper substrate 10 come in contact with each other and is a non-discharge area which discharge is not generated. The dielectric layer 14 in the discharge area serves to lower the discharge voltage by charging wall charges upon discharging, but there is a problem that the dielectric layer 14 in the non-discharge area increases the magnitude of voltage required for discharge by the parasitic capacitance (C) that is not concerned in the discharge. In addition, if the magnitude of voltage required upon discharging increases, there is a problem that power consumption increases in the entire plasma display panel.

European patent application EP 1387386 A1 discloses a plasma display device having improved luminous efficiency which includes a pair of front and back substrates opposed to each other to form between the substrates a discharge space partitioned by barrier ribs, a plurality of display electrodes, each of which is formed of a scan electrode and a sustain electrode and disposed on the substrate of a front panel to form a discharge cell between the barrier ribs, a dielectric layer formed above the front substrate to cover the display electrodes, and a phosphor layer which emits light by discharge between the display electrodes. The discharge space is filled with mixed gas as discharge gas, the mixed gas includes Xe having a partial pressure of 5% to 30%, and the dielectric layer is formed with, at its surface closer to the discharge space, a recessed part in each discharge cell.

United States published patent application US 2004/0189200 A1 discloses a plasma display panel in which a predetermined groove is formed in a predetermined position of a dielectric layer in a lattice shaped barrier structure. In addition to these barriers, second barriers are formed at a greater width or at constant intervals. Thus, exhaust ability can be improved, and error discharge due to crosstalk can be prevented from occurring. Also, luminance in corner portions of the cell can be improved, and contrast can be improved even if a black matrix is not formed.

The present invention seeks to provide an improved plasma display apparatus.

Embodiments of the present invention can provide a plasma display apparatus which lowers a discharge voltage by reducing parasitic capacitance of a panel.

A first aspect of the invention provides a plasma display apparatus according to claim 1.

A second aspect of the invention provides a plasma display apparatus according to claim 5.

Embodiments of the invention will now be described by way of non-limiting example only, with reference to the drawings, in which like numerals refer to like elements.
FIG. 1 is a view illustrating a structure of a plasma display apparatus in the prior art;
FIG. 2A is a view illustrating a barrier rib and a upper substrate in the prior art;
FIG. 2B is a view illustrating parasitic capacitance formed in a barrier rib in the prior art;
FIG. 3 is a view illustrating a plasma display apparatus according to a first embodiment of the present invention;
FIG. 4 is a view illustrating a plasma display apparatus according to a second embodiment of the present invention;
FIG. 5 is a view illustrating a plasma display apparatus according to a third embodiment of the present invention;
FIG. 6 is a view illustrating a plasma display apparatus according to a fourth embodiment of the present invention;
FIG. 7 is a view illustrating a plasma display apparatus according to a fifth embodiment of the present invention;
FIG. 8 is a view illustrating a plasma display apparatus according to a sixth embodiment of the present invention;
FIG. 9 is a view illustrating a plasma display apparatus according to a seventh embodiment of the present invention;
FIG. 10 is a view illustrating a plasma display apparatus according to an eighth embodiment of the present invention;
FIG. 11 is a view illustrating a plasma display apparatus according to a ninth embodiment of the present invention; and
FIGS. 12A to 12E are views schematically illustrating processes for manufacturing a plasma display apparatus according to the present invention.

In the first to third embodiments, parasitic capacitance is lowered by lowering the dielectric constant between the scan electrode and the sustain electrode, in the fourth to sixth embodiments, parasitic capacitance is lowered by lowering the dielectric constant of a dielectric layer in a portion overlapped with the barrier rib, and in the seventh to ninth embodiments, parasitic capacitance is lowered by lowering the dielectric constant of a portion overlapped with the barrier rib as well as a portion between electrodes.

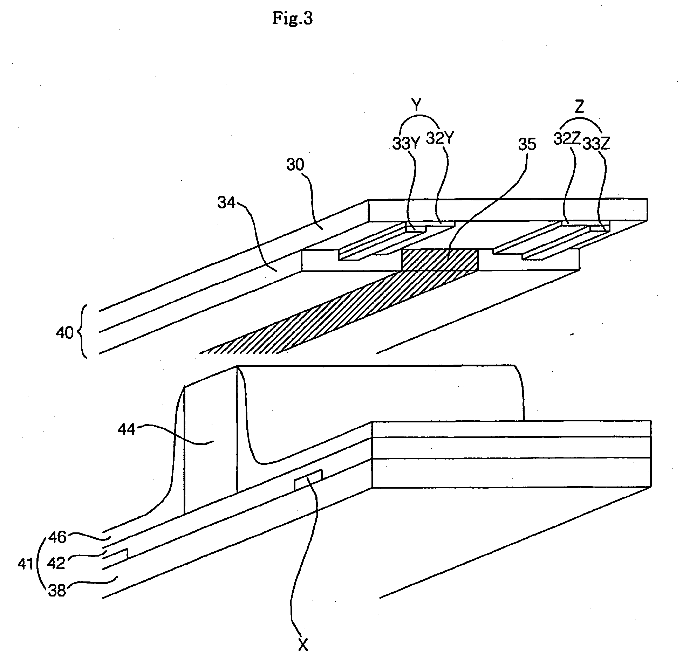

Referring to FIG. 3, a front panel 40 of a plasma display apparatus includes a upper electrode pair including a scan electrode (Y) and a sustain electrode (Z) which are formed on an upper substrate 30, an address electrode formed on the lower substrate opposite to the upper substrate 30, a barrier rib formed between the upper substrate 30 and the lower substrate, and upper dielectric layers 34 and 35 formed on the upper substrate to cover the upper electrode pair (Y, Z).

Each of the scan electrode (Y) and the sustain electrode (Z) includes transparent electrodes (32Y, 32Z) and metal bus electrodes (33Y, 33Z) having a line width smaller than that of transparent electrodes (32Y, 32Z) and formed in one side edge of the transparent electrode.

The transparent electrodes (32Y, 32Z) are generally made of a metal such as an indium tin oxide (ITO), an indium zinc oxide (IZO), and an indium tin zinc oxide (ITZO) and formed on the upper substrate 30. The metal bus electrodes (33Y, 33Z) are made of a metal such as chromium (Cr) or gold (Ag) and formed on the transparent electrodes (32Y, 32Z) to reduce a drop in voltage by the transparent electrodes (32Y, 32Z) having high resistance. The upper dielectric layers 34 and 35 and a protective film are stacked in the upper substrate 30 in which the scan electrode (Y) and the sustain electrode (Z) is formed in parallel.

In FIG. 3, the protective film among elements which composes a front panel 40 is not shown, but the protective film is formed on the upper dielectric layers 34 and 35, prevents damage of the upper dielectric layers 34 and 35 due to sputtering generated upon discharging plasma, and improves emission efficiency of a secondary electron. Magnesium oxide (MgO) is generally used as a protective film.

The upper dielectric layers 34 and 35 can be largely divided into a part (hereinafter, referred to as "a first dielectric part") 34 formed on the scan electrode (Y) and the sustain electrode (Z) and a part (hereinafter, referred to as "a second dielectric part") 35 formed between the scan electrode (Y) and the sustain electrode (Z).

The dielectric constant of the second dielectric part 35 is lower than that of the first dielectric part 34.

The first dielectric part 34 accumulates wall charges formed upon discharging to lower a discharge voltage at subsequent discharge. Therefore, as the dielectric constant is high to some degree, discharge efficiency is good.

Because the second dielectric part 35 is not greatly concerned in forming wall charges, parasitic capacitance generated by the scan electrode and the sustain electrode is lowered as the dielectric constant of this unit is lowered.

In the rear substrate 41, a lower dielectric layer 42 and a barrier rib 44 are formed on the lower substrate 38 in which the address electrode (X) is formed and a phosphor layer 46 is coated on a surface of the lower dielectric layer 42 and the barrier rib 44. The address electrode (X) is formed in a direction intersecting the scan electrode (Y) and the sustain electrode (Z).

The lower dielectric layer 42 is formed on the lower substrate 38 to cover the address electrode (X), thereby accumulating wall charges generated due to discharge. The lower dielectric layer 42 can lower a discharge voltage applied from the outside.

The barrier rib 44 and the upper and lower substrates 30 and 38 partition a discharge space. The barrier rib 44 is formed in parallel to the address electrode (X) and prevents ultraviolet radiation and visible light generated by gas discharge from leaking to the adjacent discharge cell.

An inert gas such as He, Ne, Ar, Xe, and Kr for gas discharge, a discharge gas (or mixed gas) with which these gases are combined, or an excimer gas which can generate ultraviolet radiation due to discharge fill a discharge space formed between the upper and lower substrates 30 and 38 and the barrier rib 44.

The phosphor layer 46 is excited by ultraviolet radiation generated upon discharging plasma and generates any one color of visible light of red (R), green (G), and blue (B).

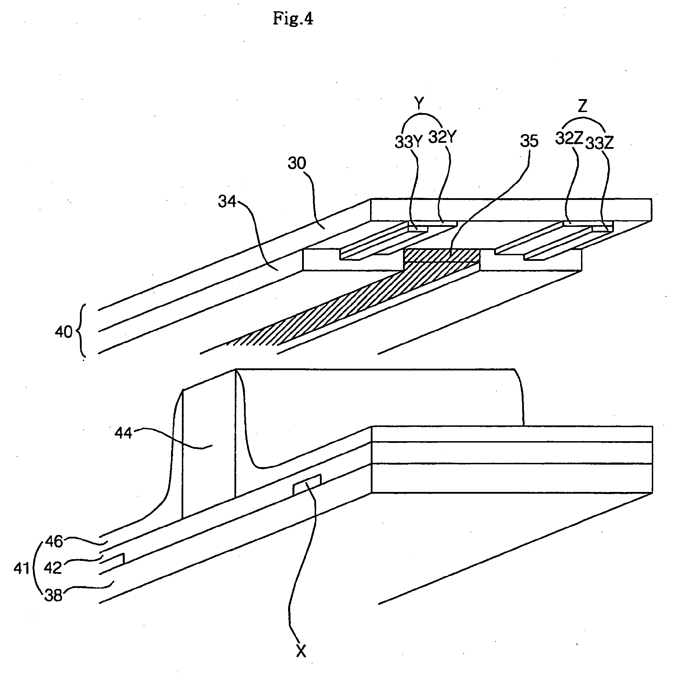

Referring to FIG. 4, the second embodiment of a plasma display apparatus is the same as the first embodiment in its basic structure, but the thicknesses of the first dielectric part 34 and the second dielectric part 35 are formed to be different from each other in the dielectric layers 34 and 35 for covering the electrodes (Y, Z) formed in the upper substrate 30. Specifically, the thickness of the second dielectric part 35 is formed to smaller than that the first dielectric part 34.

As described above, the first dielectric part 34 is a dielectric part formed on the scan electrode (Y) and the sustain electrode (Z) and the second dielectric part 35 is a dielectric part formed between the scan electrode (Y) and the sustain electrode (Z).

The second dielectric part 35 is made of a material having a dielectric constant lower than that of the first dielectric part 34. In this case, parasitic capacitance can be reduced more than in a case where the electric unit is made of a material having the same dielectric constant.

Furthermore, the thickness of the second dielectric part 35 can be made smaller than that of the first dielectric part 36, so that the effective dielectric constant between the scan electrode (Y) and the sustain electrode (Z) can be decreased and thus parasitic capacitance is decreased as well.

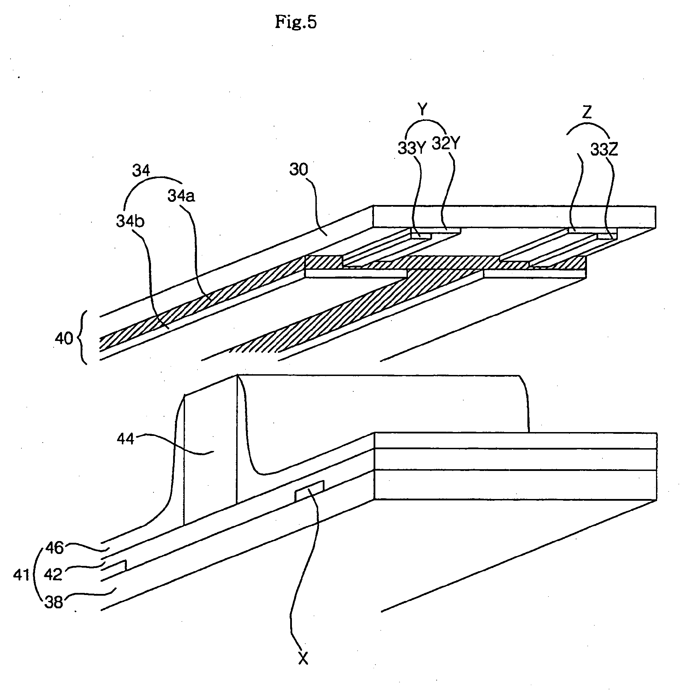

FIG. 5 is a view illustrating a plasma display apparatus according to a third embodiment, where a protective film is omitted as in FIG. 3.

Referring to FIG. 5, the third embodiment of the plasma display apparatus is the same as the first embodiment in its basic structure, but the dielectric layer 34 for covering electrodes (Y, Z) formed in the upper substrate 30 includes a first dielectric layer 34a and a second dielectric layer 34b.

The first dielectric layer 34a is formed to cover an entire upper substrate including the scan electrode (Y) and the sustain electrode (Z).

The second dielectric layer 34b is formed to cover only an upper part of the scan electrode and the sustain electrode in order to expose the first dielectric layer 34a between the scan electrode and the sustain electrode.

As described above, because the upper dielectric layer 34 is composed of two layers and one dielectric layer is formed between the scan electrode and the sustain electrode, parasitic capacitance is reduced as a thickness of a dielectric layer between the electrodes becomes smaller than that of a dielectric layer of the electrodes.

In addition, the dielectric constant of the first dielectric layer 34a can be formed to be lower than that of the second dielectric layer 34b. Therefore, the dielectric constant between the electrodes can be more certainly reduced, thereby further increasing the decrement of parasitic capacitance.

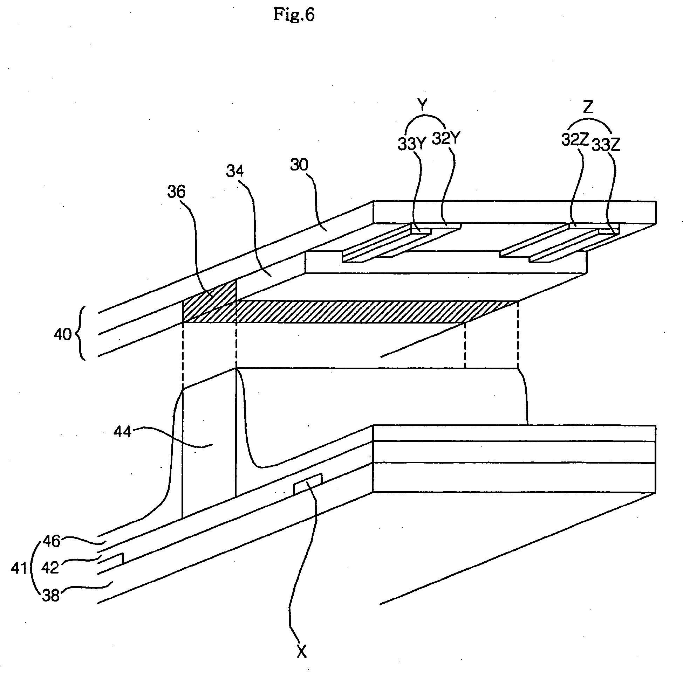

FIG. 6 is a view illustrating a plasma display apparatus according to a fourth embodiment, where a protective film is omitted.

Referring to FIG. 6, in the fourth embodiment, the dielectric constant in an area where the upper dielectric layers 34 and 36 overlap the barrier rib 44 is different from that in an area where they do not overlap the barrier rib.

That is, the upper dielectric layers 34 and 36 include a first dielectric part 34 which does not overlap the barrier rib and a second dielectric part 36 which does overlap the barrier rib.

It is characterized in that the dielectric constant of the second dielectric part 36 is smaller than that of the first dielectric part 34.

Because the dielectric constant of the second dielectric part 36 is smaller than that of the first dielectric part 34, parasitic capacitance generated in the phosphor layer of a portion overlapping the barrier rib is reduced. The second dielectric part 36 is a non-discharge area in which discharge is not generated and can reduce parasitic capacitance of the panel by lowering the dielectric constant of the dielectric layer in the non-discharge area.

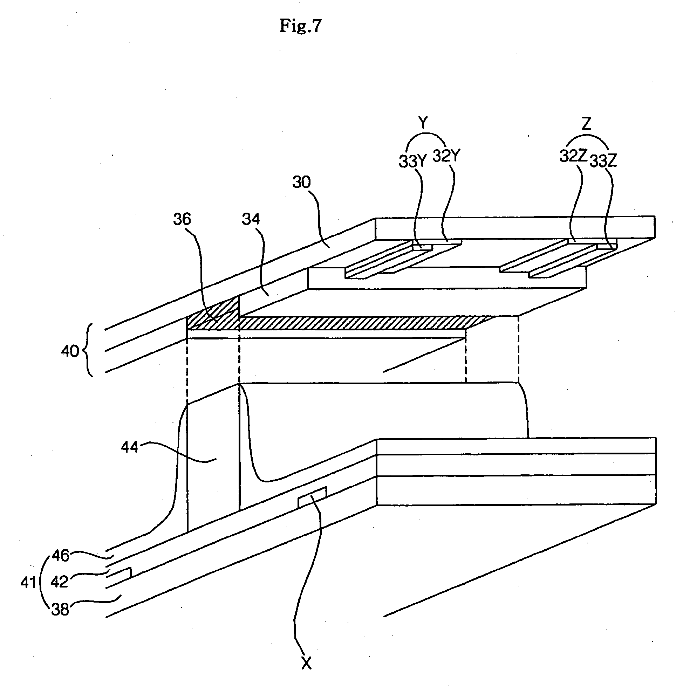

FIG. 7 is a view illustrating a plasma display apparatus according to a fifth embodiment, where the protective film is omitted.

Referring to FIG. 7, in the fifth embodiment, the thickness of the dielectric layer in the area 36 in which the upper dielectric layers 34 and 36 overlap the barrier rib 44 is smaller than that of the dielectric layer in the area 34 in which they do not overlap the barrier rib 44.

That is, the upper dielectric layers 34 and 36 include a first dielectric part 34 which does not overlap the barrier rib and the second dielectric part 36 which does overlap the barrier rib.

It is characterized in that the thickness of the second dielectric part 36 is smaller than that of the first dielectric part 34.

Because the thickness of the second dielectric part 36 is relatively smaller than that of the first dielectric part 34, the effective dielectric constant also becomes small, so that parasitic capacitance generated in the phosphor layer of a portion which overlaps the barrier rib also becomes small. The second dielectric part 36 is a non-discharge area where a discharge is not generated and can reduce parasitic capacitance of a panel by lowering the effective dielectric constant of the dielectric layer in the non-discharge area.

In this case, as the dielectric constant and the thickness of the second dielectric part 36 are set to be smaller than those of the first dielectric part 34, there is an effect that a large parasitic capacitance can be reduced.

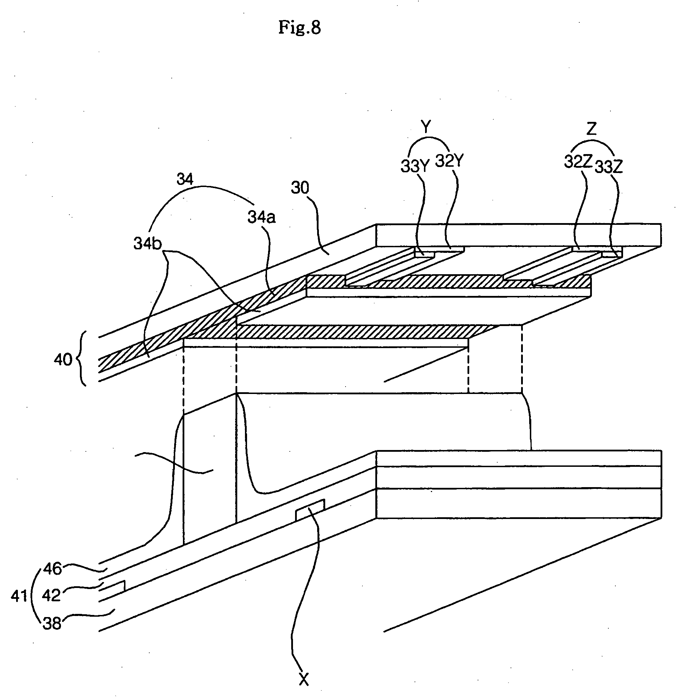

FIG. 8 is a view illustrating a plasma display apparatus according to a sixth embodiment of the present invention, where a protective film is omitted.

Referring to FIG. 8, in the sixth embodiment, the upper dielectric layer 34 includes a first dielectric layer 34a and a second dielectric layer 34b.

The first dielectric layer 34a is formed to cover an entire upper substrate including the scan electrode (Y) and the sustain electrode (Z).

The second dielectric layer 34b is formed in only a portion which does not overlap the barrier rib 44 to expose the first dielectric layer of an area overlapping barrier rib 44.

As described above, as the upper dielectric layer 34 is composed of two layers and one dielectric layer is formed in an area overlapping the barrier rib 44, the thickness of the dielectric layer in a portion overlapped with the barrier rib 44 becomes small, so that parasitic capacitance becomes small.

In addition, the dielectric constant of the first dielectric layer 34a can be formed to be lower than that of the second dielectric layer 34b. Therefore, as the dielectric constant between the electrodes can be more certainly lowered, a decrement of parasitic capacitance further increases.

All, each, or a combined one of the first to sixth embodiments can be preformed, but the present invention is not limited to this.

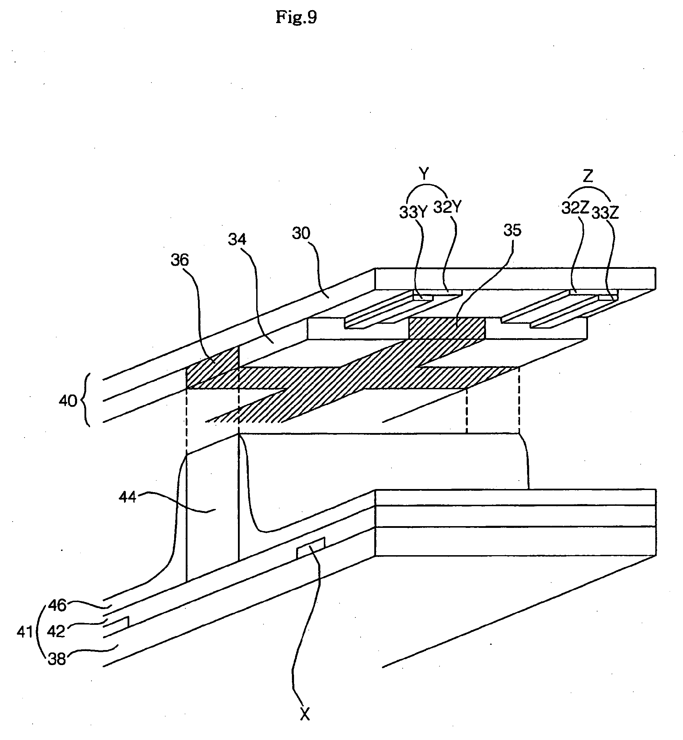

FIG. 9 is a view illustrating a plasma display apparatus according to a seventh embodiment, where a protective film is omitted.

Referring to FIG. 9, in the seventh embodiment, in the upper dielectric layers 34, 35, and 36, the dielectric constant in a portion 35 between the scan electrode (Y) and the sustain electrode (Z) is smaller than that in a portion 34 on the scan electrode (Y) and the sustain electrode (Z) and the dielectric constant in a portion 36 that overlaps the barrier rib 44 is lower than that in the portion 34 that does not overlap the barrier rib 44.

That is, the upper dielectric layer is composed so that the dielectric constant in the portion 35 between the scan electrode and the sustain electrode and the portion 36 that overlaps the barrier rib 44 is lower than that of the other portion 34.

Because such a construction has a direct influence on discharge in a discharge space, the dielectric constant can be lowered in a portion except a portion in which wall charges are formed, so that parasitic capacitance of a panel is reduced.

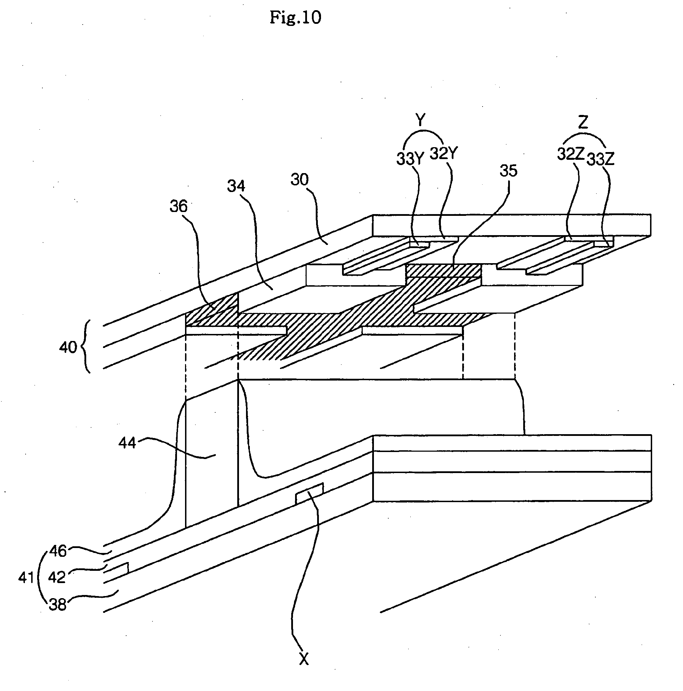

FIG. 10 is a view illustrating a plasma display apparatus according to an eighth embodiment, where a protective film is omitted.

Referring to FIG. 10, in the eighth embodiment, it is characterized in that the thickness of the dielectric layer of a portion 35 between the scan electrode (Y) and the sustain electrode (Z) and a portion 36 that overlaps the barrier rib 44 in the upper dielectric layers 34, 35, and 36 is formed to be smaller than that of the dielectric layer 34 of another portion.

Because portions 35 and 36 having a small thickness has a lower dielectric constant than the portion 34 having a large thickness, the value of parasitic capacitance is reduced.

In addition, the dielectric layers of the portion 35 between the scan electrode (Y) and the sustain electrode (Z) and the portion 36 that overlaps the barrier rib 44 can be made of a material having a dielectric constant smaller than that of another portion 34. In this case, it is possible to more effectively lower parasitic capacitance.

Because such a construction has a direct influence on discharge in a discharge space, the dielectric constant can be lowered in a portion except a portion in which wall charges are formed, so that it is possible to reduce the parasitic capacitance of a panel.

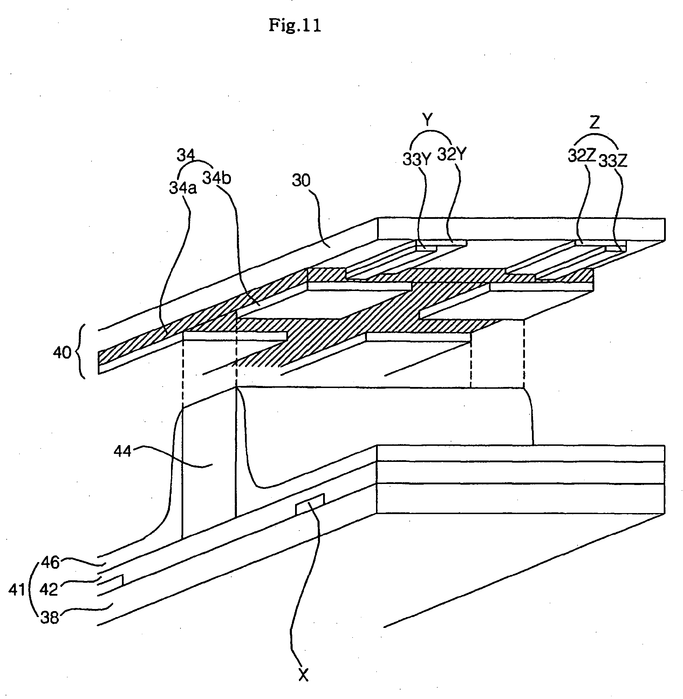

FIG. 11 is a view illustrating a plasma display apparatus according to a ninth embodiment, where a protective film is omitted.

Referring to FIG. 11, in the ninth embodiment, the upper dielectric layer 34 includes a first dielectric layer 34a and a second dielectric layer 34b.

The first dielectric layer 34a is formed to cover an entire upper substrate including the scan electrode (Y), the sustain electrode (Z), and a portion overlapping barrier rib 44.

The second dielectric layer 34b is formed to expose the first dielectric layer 34a between the scan electrode (Y) and the sustain electrode (Z) and to expose the first dielectric layer 34a of a portion overlapping the barrier rib 44.

As described above, as the upper dielectric layer 34 is composed of two layers and one dielectric layer is formed in a portion between the electrodes and in a portion overlapped with the barrier rib 44, the thickness of the dielectric layer is small in a portion between the electrodes and in a portion overlapping the barrier rib 44, so that parasitic capacitance is reduced.

In addition, the dielectric constant of the first dielectric layer 34a can be formed to be lower than that of the second dielectric layer 34b. Therefore, it is possible to more certainly reduce the effective dielectric constant between the electrodes and thus a decrement of parasitic capacitance further increases.

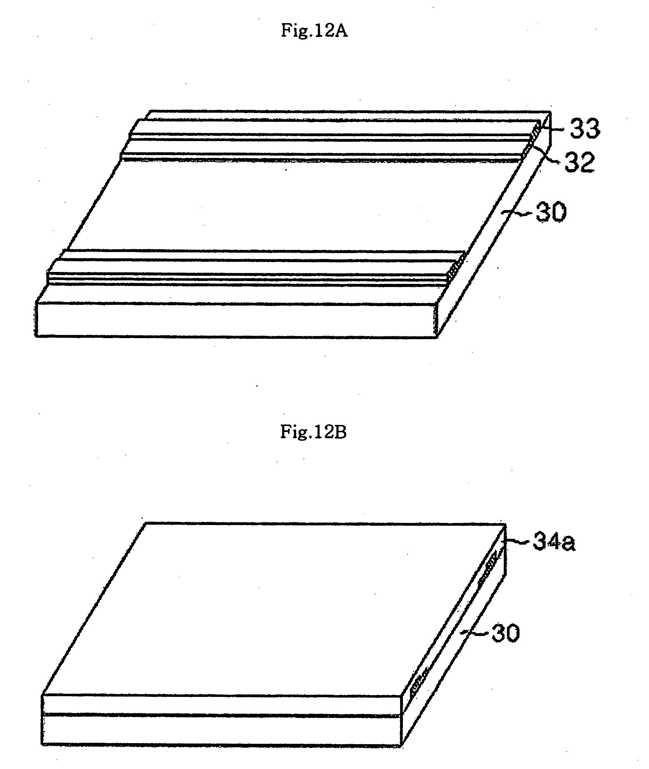

FIGS. 12A to 12E show processes of an embodiment for manufacturing a plasma display apparatus in which the first to fifth embodiments are combined. In this process, it is characterized in that the dielectric constant of a dielectric layer is changed by irradiating light in a desired portion using a mask and it can be applied to all of the first to ninth embodiments.

As shown in FIG. 12A, the transparent electrode 32 and the metal bus electrode 33 are sequentially formed on the upper substrate 30. As shown in FIG. 12B, one first layer 34a is first formed on the front surface of the upper substrate 30 in which the transparent electrode 32 and the metal bus electrode 33 are formed.

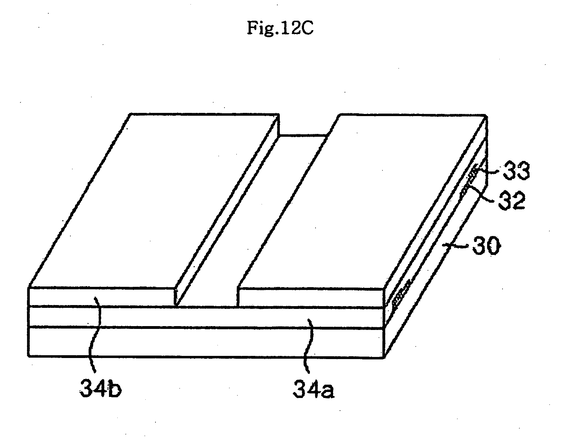

When the first layer 34a is formed, the second layer 34b is selectively formed on the first layer 34 as in FIG. 12C.

At this time, the second layer 34b is not formed in a portion overlapping the barrier rib 44 so that the thickness of the dielectric layer of a portion which does overlap the barrier rib 44 is less than that of a portion which does not overlap the barrier rib 44, i.e., the thickness of the dielectric layer of a discharge area.

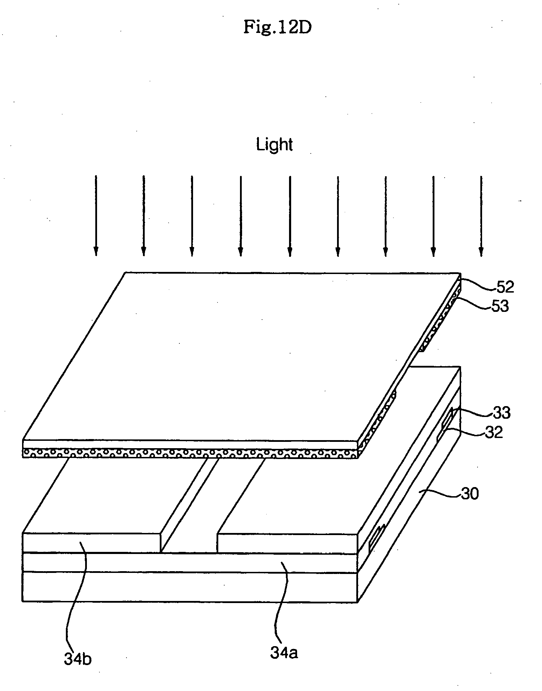

When the first dielectric part is formed by the first and second layers 34a and 34b, a mask 52 in which the light shielding layer 53 is partially formed is positioned on the dielectric layer 34 as in FIG. 12D.

The mask 52 forms a transmitting part by the light shielding layer 53 and light is irradiated to a desired part of a dielectric layer through a transmitting part of the mask 52.

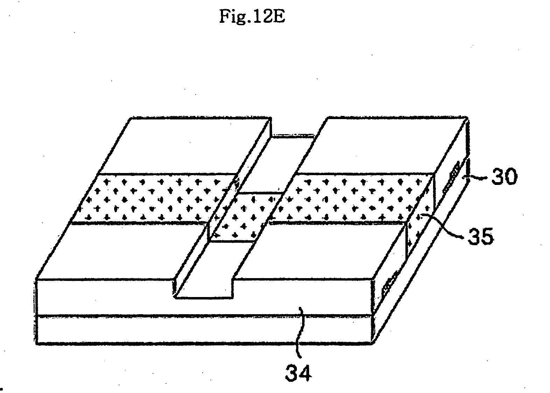

The second dielectric part 35 is formed in a portion to which light of the dielectric layer is irradiated as the dielectric constant becomes changed by irradiated light as in FIG. 12E. At this time, the light shielding layer 53 of the mask 52 is positioned on the electrodes 32 and 33 to form a transmitting part in a portion between electrodes 32 and 33 or it is positioned in a portion between the electrodes 32 and 33 to form the transmitting part in the upper area of electrodes 32 and 33. This is selected by considering the dielectric constant of the dielectric layer changing depending on irradiation by light.

As described above, the plasma display apparatus according to the present embodiment is formed by changing a dielectric layer formed on the scan electrode and the sustain electrode and the dielectric constant of a dielectric layer formed between these electrodes. In addition, the dielectric constant of a dielectric layer in a portion in which these dielectric layers overlap the barrier rib is formed to be different from that of the dielectric layer in another area.

Therefore, in a plasma display apparatus of the present embodiment, it is possible to reduce parasitic capacitance formed between the scan electrode and the sustain electrode and parasitic capacitance formed on a barrier rib. In addition, it is possible to reduce the magnitude of voltage required for discharge by reducing parasitic capacitance and thus to reduce power consumption.

Embodiments of the invention having been thus described, it will be obvious that the same may be varied in many ways. Such variations are not to be regarded as a departure from the scope of the invention, and all such modifications as would be obvious to one skilled in the art are intended to be included within the scope of the claims.

## Claims

1. A plasma display apparatus comprising:
an upper electrode pair (Y, Z) including a scan electrode (Y) and a sustain electrode (Z) which are formed on an upper substrate (30);
an address electrode (X) formed on a lower substrate (38) opposite to the upper substrate;
a barrier rib (44) formed between the upper substrate (30) and the lower substrate (38); and
a dielectric layer (34, 35) which is formed on the upper substrate (30) to cover the upper electrode pair (Y, Z) in which the dielectric layer comprises a first region (34) formed on the scan (Y) and sustain (Z) electrodes and a second region (35) located directly between the scan (Y) and sustain (Z) electrodes, the second region (35) having a lower dielectric constant than the first region (34).

2. The plasma display apparatus of claim 1, wherein the thickness of the second region (35) is smaller than that of the first region (34).

3. The plasma display apparatus of claim 1, wherein the dielectric layer (34) comprises a first dielectric layer (34a) formed on the upper substrate to cover the upper electrode pair (Y, Z); and
a second dielectric layer (34b) formed on the first dielectric layer (34a) to expose the first dielectric layer (34a) between the scan electrode (Y) and the sustain electrode (Z), in which the exposed first dielectric layer (34a) comprises the second region.

4. The plasma display apparatus of claim 3, wherein the dielectric constant of the first dielectric layer (34a) is lower than that of the second dielectric layer (34b).

5. A plasma display apparatus comprising:
an upper electrode pair (Y, Z) including a scan electrode (Y) and a sustain electrode (Z) which are formed on an upper substrate (30);
an address electrode (X) formed on a lower substrate (38) opposite to the upper substrate;
a barrier rib (44) formed between the upper substrate (30) and the lower substrate (38); and
a dielectric layer (34, 36) which is formed on the upper substrate (30) to cover the upper electrode pair (Y, Z) and in which the dielectric constant in an area (36) which overlaps the barrier rib (44) is lower than that in an area (34) which does not overlap the barrier rib (44).

6. The plasma display apparatus of claim 5, wherein the thickness of the dielectric layer in an area which overlaps the barrier rib (44) is smaller than that of the dielectric layer (34) in an area which does not overlap the barrier rib.

7. The plasma display apparatus of claim 5, wherein the dielectric layer comprises a first dielectric layer (34a) formed on the upper substrate to cover the upper electrode pair (Y, Z); and
a second dielectric layer (34b) formed on the first dielectric layer (34a) to expose the first dielectric layer (34a) in an area which overlaps the barrier rib (44).

8. The plasma display apparatus of claim 7, wherein the dielectric constant of the first dielectric layer (34a) is lower than that of the second dielectric layer (34b).

9. The plasma display apparatus of any one of claims 1-3, wherein the dielectric constant in an area which overlaps with the barrier rib (44) is lower than that in an area which does not overlap the barrier rib.

10. The plasma display apparatus of claim 9, wherein the thickness of the dielectric layer in an area which overlaps the barrier rib (44) is lower than that of the dielectric layer in an area which does not overlap the barrier rib.

11. The plasma display apparatus of claim 9, wherein the dielectric layer comprises a first dielectric layer (34a) formed on the upper substrate to cover the upper electrode pair; and
a second dielectric layer (34b) formed on the first dielectric layer to expose the first dielectric layer (34a) between the scan electrode (Y) and the sustain electrode (Z) and/or to expose the first dielectric layer in an area which overlaps the barrier rib.

12. The plasma display apparatus of claim 11, wherein the dielectric constant of the first dielectric layer (34a) is lower than that of the second dielectric layer (34b).

## Patentansprüche

1. Plasmaanzeigevorrichtung mit:
einem oberen Elektrodenpaar (Y, Z) enthaltend eine Abtastelektrode (Y) und eine Halteelektrode (Z), welche an einem oberen Substrat (30) gebildet sind;
einer Adresselektrode (X), die auf einem unteren Substrat (38) gegenüber dem oberen Substrat gebildet ist;
einer Sperrrippe (44), die zwischen dem oberen Substrat (30) und dem unteren Substrat (38) gebildet ist; und
einer dielektrischen Schicht (34, 35), die an dem oberen Substrat (30) zur Abdeckung des oberen Elektrodenpaars (Y, Z) gebildet ist, wobei die dielektrische Schicht einen auf der Abtast- (Y) und der Halteelektrode (Z) gebildeten ersten Bereich (34) und einen direkt zwischen der Abtast- (Y) und der Halteelektrode (Z) liegenden zweiten Bereich (35) aufweist, welcher zweite Bereich (35) eine niedrigere dielektrische Konstante als der erste Bereich (34) aufweist.

2. Plasmaanzeigevorrichtung nach Anspruch 1, wobei die Dicke des zweiten Bereichs (35) geringer ist als jene des ersten Bereichs (34).

3. Plasmaanzeigevorrichtung nach Anspruch 1, wobei die dielektrische Schicht (34) eine auf dem oberen Substrat zur Abdeckung des oberen Elektrodenpaars (Y, Z) gebildete erste dielektrische Schicht (34a) und
eine auf der ersten dielektrischen Schicht (34a) zur Exposition der ersten dielektrischen Schicht (34a) zwischen der Abtastelektrode (Y) und der Halteelektrode (Z) gebildete zweite dielektrische Schicht (34b) aufweist, wobei die exponierte erste dielektrische Schicht (34a) den zweiten Bereich aufweist.

4. Plasmaanzeigevorrichtung nach Anspruch 3, wobei die dielektrische Konstante der ersten dielektrischen Schicht (34a) geringer ist als jene der zweiten dielektrischen Schicht (34b).

5. Plasmaanzeigevorrichtung mit:
einem oberen Elektrodenpaar (Y, Z) enthaltend eine Abtastelektrode (Y) und eine Halteelektrode (Z), welche an einem oberen Substrat (30) gebildet sind;
einer Adresselektrode (X), die auf einem unteren Substrat (38) gegenüber dem oberen Substrat gebildet ist;
einer Sperrrippe (44), die zwischen dem oberen Substrat (30) und dem unteren Substrat (38) gebildet ist; und
einer dielektrischen Schicht (34, 36), die auf dem oberen Substrat (30) zur Abdeckung des oberen Elektrodenpaars (Y, Z) gebildet ist, wobei die dielektrische Konstante in einem Bereich (36), der die Sperrrippe (44) überlappt, geringer ist als jene in einem Bereich (34), der die Sperrrippe (44) nicht überlappt.

6. Plasmaanzeigevorrichtung nach Anspruch 5, wobei die Dicke der dielektrischen Schicht in einem Bereich, der die Sperrrippe (44) überlappt, geringer ist als jene der dielektrischen Schicht (34) in einem Bereich, der die Sperrrippe nicht überlappt.

7. Plasmaanzeigevorrichtung nach Anspruch 5, wobei die dielektrische Schicht eine auf dem oberen Substrat zur Abdeckung des oberen Elektrodenpaars (Y, Z) gebildete erste dielektrische Schicht (34a) und
eine auf der ersten dielektrischen Schicht (34a) zur Exposition der ersten dielektrischen Schicht (34a) in einem Bereich, der die Sperrrippe (44) überlappt, gebildete zweite dielektrische Schicht (34b) aufweist.

8. Plasmaanzeigevorrichtung nach Anspruch 7, wobei die dielektrische Konstante der ersten dielektrischen Schicht (34a) geringer ist als jene der zweiten dielektrischen Schicht (34b).

9. Plasmaanzeigevorrichtung nach einem der Ansprüche 1 bis 3, wobei die dielektrische Konstante in einem Bereich, der die Sperrrippe (44) überlappt, geringer ist als in einem Bereich, der die Sperrrippe nicht überlappt.

10. Plasmaanzeigevorrichtung nach Anspruch 9, wobei die Dicke der dielektrischen Schicht in einem Bereich, der die Sperrrippe (44) überlappt, geringer ist als jene der dielektrischen Schicht in einem Bereich, der die Sperrrippe nicht überlappt.

11. Plasmaanzeigevorrichtung nach Anspruch 9, wobei die dielektrische Schicht eine auf dem oberen Substrat zur Abdeckung des oberen Elektrodenpaars gebildete erste dielektrische Schicht (34a) und eine auf der ersten dielektrischen Schicht zur Exposition der ersten dielektrischen Schicht (34a) zwischen der Abtastelektrode (Y) und der Halteelektrode (Z) und/oder zur Exposition der ersten dielektrischen Schicht in einem Bereich, der die Sperrrippe überlappt, gebildete zweite dielektrische Schicht (34b) aufweist.

12. Plasmaanzeigevorrichtung nach Anspruch 11, wobei die dielektrische Konstante der ersten dielektrischen Schicht (34a) geringer ist als jene der zweiten dielektrischen Schicht (34b).

## Revendications

1. Appareil d'affichage à plasma, comprenant :
une paire supérieure d'électrodes (Y, Z) comprenant une électrode de balayage (Y) et une électrode d'entretien (Z) qui sont formées sur un substrat supérieur (30) ;
une électrode d'adresse (X) formée sur un substrat inférieur (38) en face du substrat supérieur ;
une nervure barrière (44) formée entre le substrat supérieur (30) et le substrat inférieur (38) ; et
une couche diélectrique (34, 35) qui est formée sur le substrat supérieur (30) pour couvrir la paire supérieure d'électrodes (Y, Z) dans lequel la couche diélectrique comprend une première région (34) formée sur les électrodes de balayage (Y) et d'entretien (Z) et une seconde région (35) située directement entre les électrodes de balayage (Y) et d'entretien (Z), la seconde région (35) possédant une constante diélectrique inférieure à celle de la première région (34).

2. Appareil d'affichage à plasma selon la revendication 1, dans lequel l'épaisseur de la seconde région (35) est inférieure à celle de la première région (34).

3. Appareil d'affichage à plasma selon la revendication 1, dans lequel la couche diélectrique (34) comprend une première couche diélectrique (34a) formée sur le substrat supérieur pour couvrir la paire supérieure d'électrodes (Y, Z) ; et
une seconde couche diélectrique (34b) formée sur la première couche diélectrique (34a) pour exposer la première couche diélectrique (34a) entre l'électrode de balayage (Y) et l'électrode d'entretien (Z), dans lequel la première couche diélectrique exposée (34a) comprend la seconde région.

4. Appareil d'affichage à plasma selon la revendication 3, dans lequel la constante diélectrique de la première couche diélectrique (34a) est inférieure à celle de la seconde couche diélectrique (34b).

5. Appareil d'affichage à plasma, comprenant :
une paire supérieure d'électrodes (Y, Z) comprenant une électrode de balayage (Y) et une électrode d'entretien (Z) qui sont formées sur un substrat supérieur (30) ;
une électrode d'adresse (X) formée sur un substrat inférieur (38) en face du substrat supérieur ;
une nervure barrière (44) formée entre le substrat supérieur (30) et le substrat inférieur (38) ; et
une couche diélectrique (34, 36) qui est formée sur le substrat supérieur (30) pour couvrir la paire supérieure d'électrodes (Y, Z) et dans lequel la constante diélectrique dans une zone (36) qui chevauche la nervure barrière (44) est inférieure à celle dans une zone (34) qui ne chevauche pas la nervure barrière (44).

6. Appareil d'affichage à plasma selon la revendication 5, dans lequel l'épaisseur de la couche diélectrique dans une zone qui chevauche la nervure barrière (44) est inférieure à celle de la couche diélectrique (34) dans une zone qui ne chevauche pas la nervure barrière.

7. Appareil d'affichage à plasma selon la revendication 5, dans lequel la couche diélectrique comprend une première couche diélectrique (34a) formée sur le substrat supérieur pour couvrir la paire supérieure d'électrodes (Y, Z) ; et
une seconde couche diélectrique (34b) formée sur la première couche diélectrique (34a) pour exposer la première couche diélectrique (34a) dans une zone qui chevauche la nervure barrière (44).

8. Appareil d'affichage à plasma selon la revendication 7, dans lequel la constante diélectrique de la première couche diélectrique (34a) est inférieure à celle de la seconde couche diélectrique (34b).

9. Appareil d'affichage à plasma selon une quelconque des revendications 1 à 3, dans lequel la constante diélectrique dans une zone qui chevauche la nervure barrière (44) est inférieure à celle dans une zone qui ne chevauche pas la nervure barrière.

10. Appareil d'affichage à plasma selon la revendication 9, dans lequel l'épaisseur de la couche diélectrique dans une zone qui chevauche la nervure barrière (44) est inférieure à celle de la couche diélectrique dans une zone qui ne chevauche pas la nervure barrière.

11. Appareil d'affichage à plasma selon la revendication 9, dans lequel la couche diélectrique comprend une première couche diélectrique (34a) formée sur le substrat supérieur pour couvrir la paire supérieure d'électrodes ; et
une seconde couche diélectrique (34b) formée sur la première couche diélectrique pour exposer la première couche diélectrique (34a) entre l'électrode de balayage (Y) et l'électrode d'entretien (Z) et/ou pour exposer la première couche diélectrique dans une zone qui chevauche la nervure barrière.

12. Appareil d'affichage à plasma selon la revendication 11, dans lequel la constante diélectrique de la première couche diélectrique (34a) est inférieure à celle de la seconde couche diélectrique (34b).
